Europäisches Patentamt

European Patent Office

Office européen des brevets

(11) Publication number: **0 218 243 B1**

## EUROPEAN PATENT SPECIFICATION

(45) Date of publication of patent specification: **29.01.92** (51) Int. Cl.⁵: **G11B 7/013**, G11B 7/125

(21) Application number: **86113927.7**

(22) Date of filing: **08.10.86**

(54) **Data recording and reproducing apparatus.**

(30) Priority: **08.10.85 JP 224547/85**
**08.10.85 JP 224548/85**

(43) Date of publication of application:
**15.04.87 Bulletin 87/16**

(45) Publication of the grant of the patent:
**29.01.92 Bulletin 92/05**

(84) Designated Contracting States:
**DE FR GB**

(56) References cited:
**US-A- 3 778 785**

**PATENT ABSTRACTS OF JAPAN, vol. 8, no.
278 (P-322)[1715], 19th December 1984; & JP-
A-59 144 049 (MATSUSHITA DENKI SANGYO
K.K.) 17-08-1984**

**PATENT ABSTRACTS OF JAPAN, vol. 9, no.
232 (P-389)[1955], 18th September 1985; &
JP-A-60 87 440 (SANYO DENKI K.K.)
17-05-1985**

**PATENT ABSTRACTS OF JAPAN, vol. 9, no.
312 (P-411)[2035], 7th December 1985; & JP-
A-60 140 551 (RICOH K.K.) 25-07-1985**

(73) Proprietor: **MATSUSHITA ELECTRIC INDUSTRI-
AL CO., LTD.
1006, Oaza Kadoma
Kadoma-shi, Osaka-fu, 571(JP)**

(72) Inventor: **Satoh, Isao
36-12, Naritahigashigaoka
Neyagawa-shi(JP)**
Inventor: **Ichinose, Makoto
4-3-303, Harayamadai-1-cho
Sakai-shi(JP)**
Inventor: **Fukushima, Yoshihisa
14-C-508, Sekime-6-chome
Joto-ku Osaka(JP)**
Inventor: **Kuroki, Yuzuru
14-6-410, Minowa-2-chome
Toyonaka-shi(JP)**
Inventor: **Takagi, Yuuji
3-14, Miyukihigashimachi
Neyagawa-shi(JP)**

(74) Representative: **Patentanwälte Leinweber &
Zimmermann
Rosental 7/II Aufg.
W-8000 München 2(DE)**

## Description

## BACKGROUND OF THE INVENTION

The present invention relates to a data recording and reproducing apparatus, or more in particular, to a data recording and reproducing apparatus in which data is capable of being recorded or reproduced on the one hand and is capable of being erased on the other hand with a laser beam radiated on an optical disc.

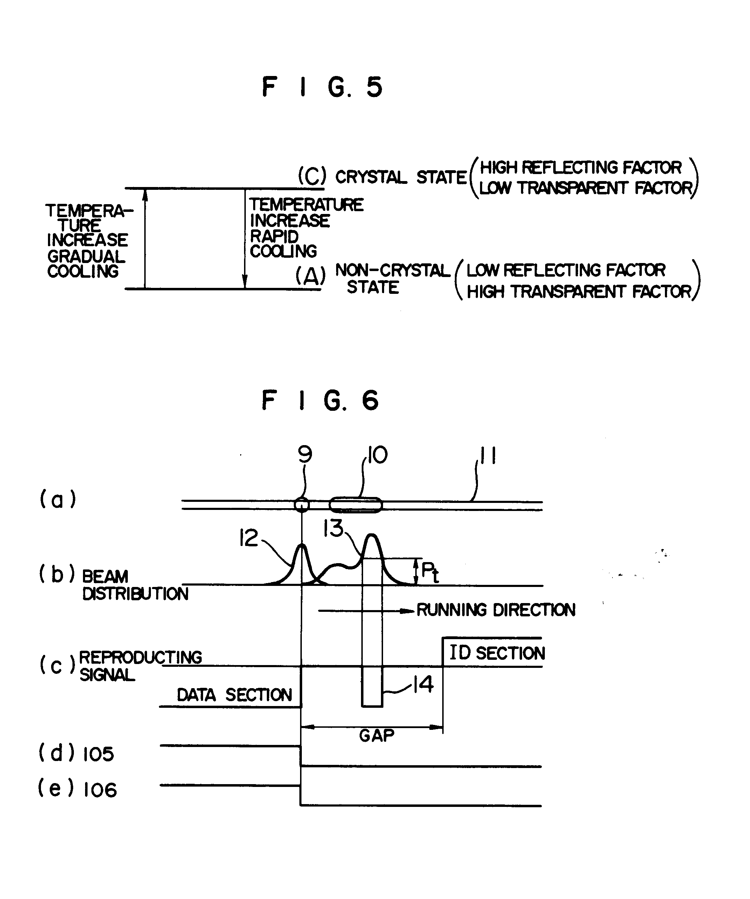

Fig. 5 shows a phase change between an amorphous state A and a crystal state C of a phase-changed recording medium of a conventional data recording and reproducing apparatus. The reflection factor is small in the amorphous state A, and high in crystal state C. The crystal state C is reached when the temperature of a medium is increased locally to almost the melting point and the particular part is annealed, whereas the non-crystal state A is attained when the temperature of the part in the crystal state C is locally increased to almost the melting point followed by quenching. Fig. 6 is a diagram showing the principle of recording and reproduction for explaining the signal recording and reproduction operation. Fig. 6 (a) shows a construction of a light beam for realizing the condition for temperature increase followed by quenching and temperature increase followed by annealing of the medium. Fig. 6 (b) shows a light distribution for that purpose. In Fig. 6, reference numeral 9 designates a recording-reproducing light beam with small diameter, numeral 12 a distribution thereof, numeral 10 an erasing light beam with long diameter, and numeral 13 a light distribution thereof. Numeral 11 designates a guide track formed by evaporation with the recording medium. The difference in light beam diameter is such that the conditions for temperature increase followed by quenching are set up with a short diameter, and the conditions for temperature increase followed by annealing are established with a long diameter. Fig. 6 (c) shows waveforms of reproduction signals from an identifier section (hereinafter referred to as "the ID section"), a data section and a gap section of a sector formed in the guide track 11 of the optical disc.

Fig. 6 (d) shows a write gate signal 105 for setting the recording and reproducing light beam in a recording mode and commanding the writing by modulating it with a write data into the data section, and Fig. 6 (e) an erasing gate signal 106 for controlling the period of time during which the erasing light beam 10 is radiated on the data section of the guide track 11 with a predetermined intensity. In the data section, the write gate signal 105 and the erasing gate signal 106 are enabled so that the data section is erased with the preceding erasing light beam 10, and the write data is recorded by the succeeding recording-reproducing light beam 9. At the end of the data recording, the write gate signal 105 and the erasing gate signal 106 are both turned off.

In the above-mentioned configuration, the write gate signal 105 and the erasing gate signal 106 are turned off at the same time, and therefore, the operation of writing in the medium is effected with the erasing light beam 10 in the manner shown by 14 of Fig. 6 (c).

The medium is erased by increasing the temperature and annealing by the erasing light beam 10. This process of temperature increase followed by annealing is realized as a whole function including the peak at the leading portion and the uniform distribution 13 at the rear portion of the erasing light beam 10. The very instant the erasing gate signal 106 is turned off, therefore, at the leading portion of the distribution 13 of the erasing light beam 10, the portion of the medium beyond the recording threshold light power Pt meets the conditions for temperature increase and quenching thereby to render the recording as shown by a recording trace 14 in view of the fact that the light at the rear portion of the erasing light beam 10 in the distribution 13 is turned off and is not radiated.

This recording trace 14, which is a jitter caused by the eccentricity of the disc or the rotation variations thereof, varies from several tens of microns to 100 microns in position. Further, since the preceding recording traces are erased only partially, it makes up a signal having much DC components 10 microns wide after a multiplicity of erasures. As a result, the reproduction signal has a waveform distortion such as zag caused by DC component change in the gap, thus posing the problem that the ID section of the next sector cannot be read with high accuracy. Also, the erasing light beam 10, which is radiated all the time, has a higher average power than the recording power modulated, and therefore if it is turned off suddenly as explained above, a thermal shock is exerted on the medium. As a consequence, at the turned-off portion of the erasing light beam 10, the effect of the thermal expansion caused in the recording medium of the data section of the sector causes a separation from the base material of the recording film, or the repetitive recording and erasure causes a conspicuous thermal fatigue thereby to deteriorate the recording-reproduction characteristics.

## SUMMARY OF THE INVENTION

In view of the aforementioned points, the object of the present invention is to provide a data recording and reproducing apparatus which is free of a recording trace or a defect by the erasing light beam in the rear gap of the data section of the sector.

According to the present invention, this object is achieved by reducing the intensity of the erasing light beam during turning off the same. Said reducing of the intensity of the erasing light beam can be carried out by a gradual reducing with time or by modulating the intensity of the light beam with a high-frequency signal. In particular, the modulating of the erasing light beam can be done with a high-frequency signal having a continuously changed duty factor.

According to a first aspect of the present invention, there is provided a data recording and reproducing apparatus comprising means for radiating an erasing light beam and a recording-reproducing light beam sequentially on an optical disc for recording and reproducing or erasing the data by sector, means for recording or reproducing the data with a recording-reproducing light beam, means for erasing the data with the erasing light beam, and means for reducing and controlling the light intensity of the erasing light beam with time.

According to another aspect of the present invention, there is provided a data recording and reproducing apparatus comprising means for radiating an erasing light beam and a recording-reproducing light beam sequentially on an optical disc for recording and reproducing or erasing the data by sector, means for recording or reproducing data with the recording-reproducing light beam, means for erasing the data with the erasing light beam, and means for modulating and controlling the light intensity of the erasing light beam.

According to the present invention, by use of the aforementioned configuration, in the process of rewriting data in the sector, the erasing light beam is radiated on the data section in advance of the recording-reproducing light beam, and the temperature increase followed by annealing is effected by the erasing light beam thereby to erase the old data, so that the temperature increase followed by quenching is effected with the recording-reproducing light beam set at a recording light intensity thereby to record new data. At the end of the recording of the new data, the light intensity of the erasing light beam is modulated and turned off, and in this manner, the recording trace which may be caused at the time of turning off the erasing light eliminated on one hand, and the DC component of the recording trace occurred is reduced on the other hand, while at the same time reducing the thermal shock thereby to prevent a defect.

BRIEF DESCRIPTION OF THE DRAWINGS

Fig. 1 is a block diagram showing a data recording and reproducing apparatus according to a first embodiment of the present invention.

Fig. 2 shows operation waveforms produced from the circuit shown in Fig. 1.

Fig. 3 is a block diagram showing a data recording and reproducing apparatus according to a second embodiment of the present invention.

Fig. 4 shows operation waveforms produced from the circuit of Fig. 3.

Fig. 5 is a diagram for explaining the recording, reproduction and erasure in connection with the phase change between the amorphous state A and the crystal state C of a phase-changed recording medium of a conventional data recording and reproducing apparatus.

Fig. 6 is a diagram showing the principle of recording and reproduction for explaining the signal recording and reproducing operation; in which (a) shows a configuration of a light beam, (b) a light distribution thereof, (c) a waveform of the light disc reproducing signal, (d) a write gate signal, and (e) an erasing gate signal.

DESCRIPTION OF THE PREFERRED EMBODIMENTS

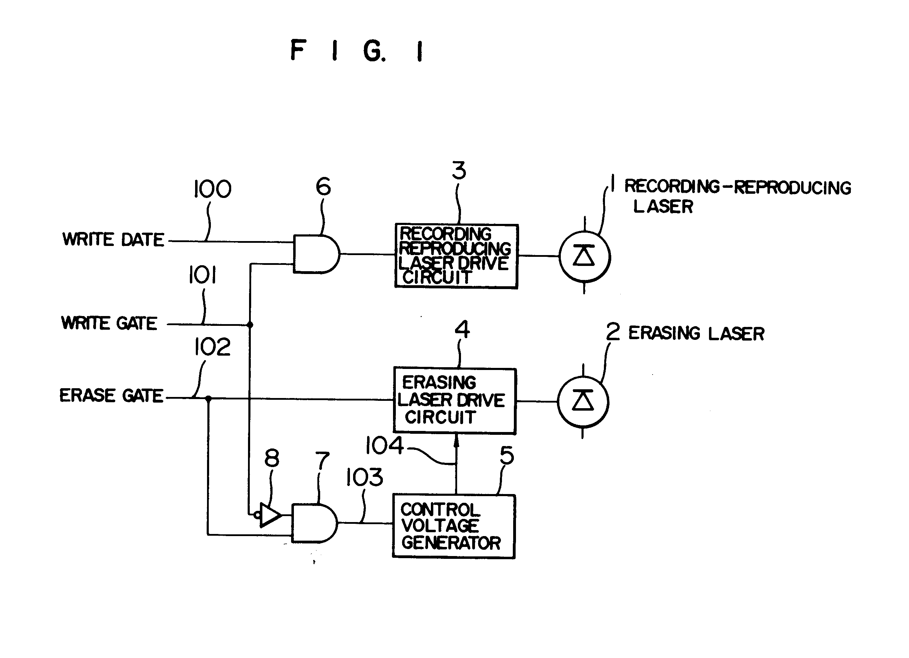

A block diagram of a data recording and reproducing apparatus according to a first embodiment of the present invention is shown in Fig. 1. In Fig. 1, reference numeral 1 designates a recording-reproducing laser beam, numeral 2 an erasing laser beam, numeral 3 a recording-reproducing laser drive circuit, numeral 4 an erasing laser drive circuit, numeral 5 a control voltage generator circuit for controlling the light intensity at the time of turning off the erasing laser beam, numerals 6 and 7 AND gates, and numeral 8 an inverter. Numeral 100 designates a write data signal, numeral 101 a write gate signal, numeral 102 an erase gate signal, numeral 103 an erase power control gate signal, and numeral 104 an erase power variable signal.

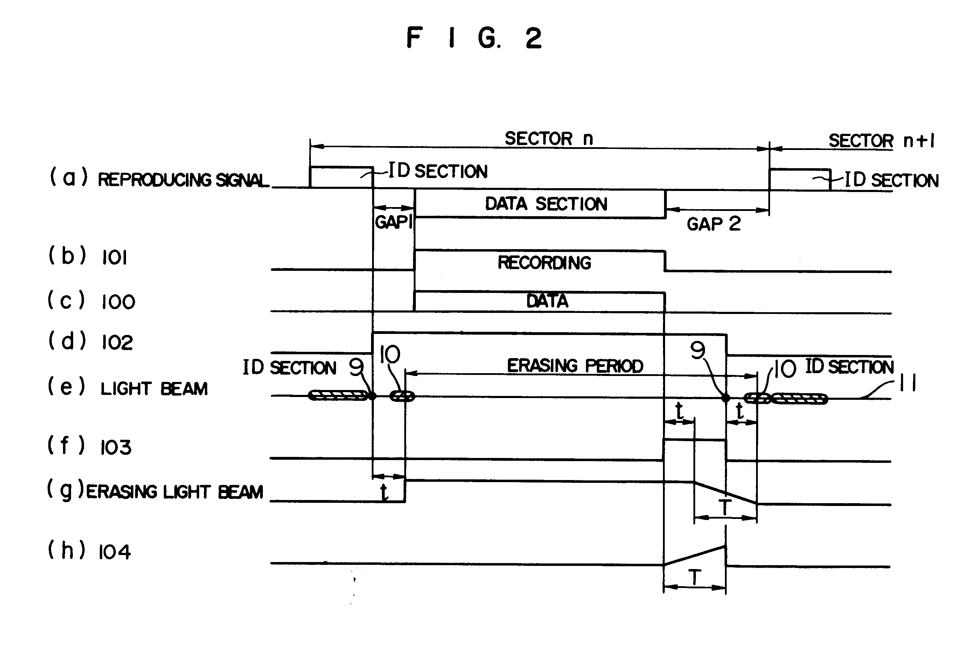

Operation waveforms of the circuit of Fig. 1 are shown in Fig. 2. In Fig. 2, numeral 9 designates a recording-reproducing light beam, numeral 10 an erasing light beam, and numeral 11 a guide track.

Fig. 2 (a) shows a waveform of a reproduction signal, in which character n designates a sector including an ID section, a gap 1, a data section and a gap 2. A write data signal is shown in Fig. 2 (c), a write gate signal in Fig. 2 (b) and an erase gate signal in Fig. 2 (d). Fig. 2 (e) is a diagram showing relative positions of the erasing light beam 10 and the recording-reproducing light beam 9 on the guide track 11, Fig. 2 (f) an erase power control gate signal, Fig. 2 (g) a light output level of the erasing light beam 10, and Fig. 2 (h) a waveform of the erase power variable signal.

The operation of the data recording and reproducing apparatus according to the present embodiment configured as above will be explained below.

Now, take as an example the case in which the data section of the sector n is rewritten.

Upon detection of the ID section of the sector n, the erase gate signal 102 is produced, and after the lapse of the time corresponding to the gap 1, the write gate signal 101 and the write data signal 100 are produced. As shown in Fig. 2 (e), the erasing light beam 10 is advanced by the time t from the recording-reproducing light beam 9. As a result, the old data section is increased in temperature and annealed by the erasing light beam 10 into the crystal state C, that is, the erased state (levels of the gaps 1 and 2). The erasing gate signal 102 is applied to the erase laser drive circuit 4 thereby to light the erasing laser 2 with a predetermined light output. The write data signal 100 and the write gate signal 101 are applied through the AND gate 6 to the reproduction laser drive circuit 3, so that the recording-reproducing laser is modulated at the level of the recording light intensity thereby to record the data by temperature increase followed by quenching.

Upon completion of data recording, the write gate signal 101 turns off. The write gate signal 101 is inverted through the inverter 8 and the erase power control gate signal 103 (Fig. 2 (f)) is generated by the erasing gate signal 102 from the AND gate 7 (Fig. 2 (f)). The signal 103 is converted into the erase power variable signal 104 (Fig. 2 (h)) at the control voltage generator circuit 5. The erase power variable signal 104 is applied to the erasing laser drive circuit 4 thereby to control the light output of the erasing laser 2 by gradually alleviating and turning off during the time T as shown in Fig. 2 (g).

The light intensity of the erasing light beam 10, which is set to a predetermined output level during radiation of the data section as shown in Fig. 2 (g), is alleviated and turned off gradually in monotonous manner during the time T after the data recording. The waveform of the erase power variable signal 104 during this time period T may take a linear form, exponential function or a stepped form. The erasing laser 2 may be turned off when it is reduced sufficiently below the recording threshold value Pt of the medium. By turning off the erasing laser 2 by the power control sequence in this way, the conditions requiring temperature increase and quenching of the erasing light beam 10 are eliminated.

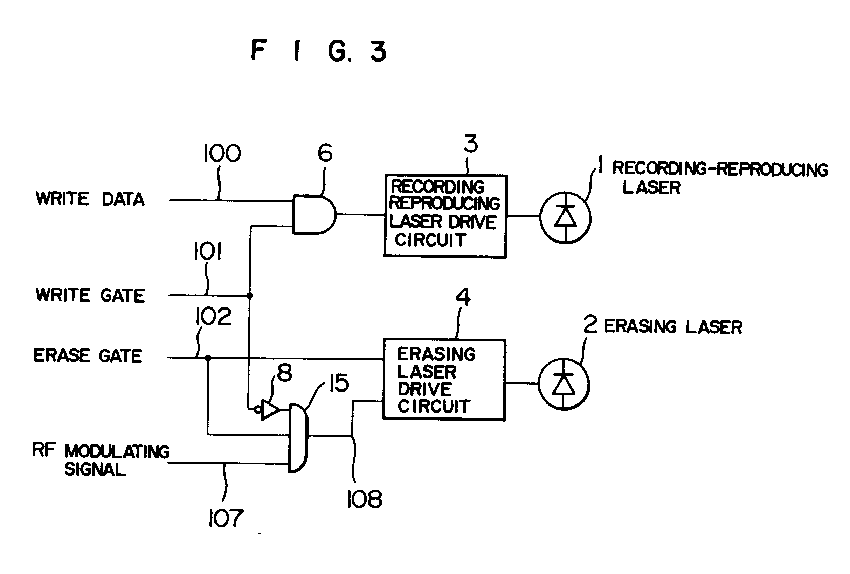

Figs. 3 is a block diagram showing a data recording and reproducing apparatus according to a second embodiment of the present invention. In Fig. 3, numerals 1 to 4, 6, 8 and 100 to 102 designate the same component elements as those in Fig. 1 denoted by the same reference numerals.

Numeral 15 designates a three-input AND gate, numeral 107 a modulation signal, and numeral 108 an erase power modulation signal of the erasing laser drive circuit 4.

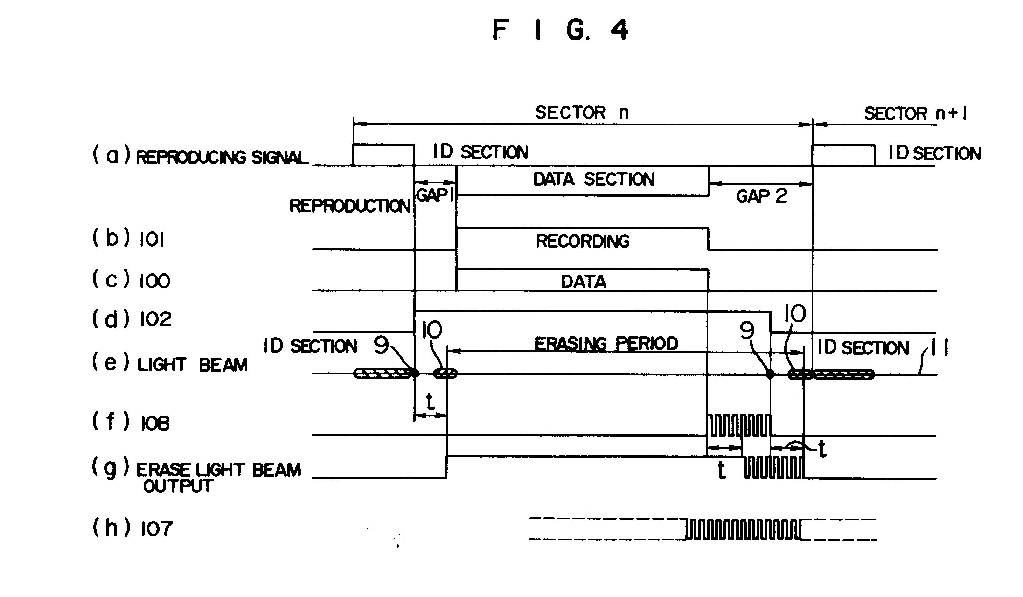

Fig. 4 shows operation waveforms produced from the circuit of Fig. 3. (a) to (e) of Fig. 4 correspond to (a) to (e) respectively of Fig. 2, and show the same waveforms. Fig. 4 (f) shows an erase power modulation signal 108, Fig. 4 (g) a light output of the erasing light beam 10, and Fig. 4 (h) a waveform of the modulation signal 107.

The operation of the data recording and reproducing apparatus according to a second embodiment of the present invention configured as mentioned above will be explained below.

Explanation will be made with reference to the case in which the data section of the sector n is rewritten.

Upon detection of the ID section of the sector n, the erasing gate signal 102 is produced, and after the time associated with the gap 1, the write gate signal 101 and the write data signal 100 are produced. As shown in Fig. 4 (e), the erasing light beam 10 is advanced by time t from the recording-reproducing light beam 9. As a result, the old data section is increased in temperature and annealed by the erasing light beam 10 into the crystal state C, that is, the erased state (level of gaps 1 and 2). The erasing gate signal 102 is applied to the erasing laser drive circuit 4 thereby to light the erasing laser 2 with a predetermined light output. The write data signal 100 and the write gate signal 101 are applied through the AND gate 6 to the recording-reproducing laser drive circuit 3 thereby to modulate the recording-reproducing laser 1 with the recording light intensity level, thus recording the data by temperature increase followed by quenching.

Upon completion of the data recording, the write gate signal 101 is turned off. The write gate signal 101 is inverted in the inverter 8, so that the erase power modulation signal 108 (Fig. 4 (f)) is generated from the erasing gate signal 102, the modulation signal 107 and the AND gate 15, which signal 108 is applied to the erasing laser drive circuit 4, and the light output of the erasing laser 2 is thus controlled by being turned off and modulated with high frequency during the period of time T as shown in Fig. 4 (g).

The light intensity of the erasing light beam 10 is set to a predetermined output level during radiation of the data section as shown in Fig. 4 (g), and during the period of time T after data recording, turned off by being modulated with a high frequency. A frequency meeting the conditions for temperature increase followed by annealing is used for the erase power modulation signal 108 during the time T. In this way, by turning off the erasing laser beam 2 by power modulation as mentioned above, the average intensity of the erasing light beam 10 is reduced by half, so that the medium is subjected to the conditions for temperature increase followed by annealing instead of the temperature increase followed by quenching. Also, even when the conditions for temperature increase followed by quenching occur, the recording trace turns into dots, thereby remarkably reducing the DC component. Further, if the duty factor of the modulation signal is continuously changed by a variable frequency oscillator for power modulation, on the other hand, it is possible to reduce the average intensity of the erasing light beam 10 gradually.

Furthermore, when the output of the recording-reproducing light beam changes from the recording to reproducing state, an excessive power may be generated by the transient switching phenomenon of the laser drive circuit, thereby often giving a thermal shock to the recording medium as at the time of turning off the erasing beam. In such a case, as in the second embodiment, the transient power may be dampened by pulse modulation of the output of the recording-reproducing light beam when the recording-reproducing light beam changes from the recording to reproducing state.

It will thus be understood from the foregoing description that according to the present invention, the control for gradual reduction of the light intensity of the erasing light beam and the control by modulation of the light intensity of the erasing light beam gradually reduce the laser power and alleviate the thermal shock on the recording medium at the time of turning off the erasing light beam, thereby making it possible to prevent separation or tear of the recording film. As a consequence, a great practical effect is obtained by permitting an increased number of recording erasures in the recording medium and facilitating signal processing.

## Claims

1. A data recording and reproducing apparatus comprising means (1, 2) for radiating an erasing light beam (10) and a recording-reproducing light beam (9) sequentially on an optical disc to record and reproduce and erase data, means (3) for recording and reproducing data with said recording-reproducing light beam, means (4) for erasing the data with said erasing light beam, and means (5) for controlling the light intensity of said erasing light beam, said erasing means (4) radiating a data recording section of the disc with the erasing light beam and said erasing light beam intensity control means (5) turning off the intensity of said erasing light beam by gradually reducing the same.

2. A data recording and reproducing apparatus according Claim 1, wherein the erasing light beam is radiated in advance of the recording-reproducing light beam, and after the recording-reproducing light beam is changed from the recording state to reproducing state, the intensity of the erasing light beam is progressively reduced and turned off.

3. A data recording and reproducing apparatus according to Claim 1, wherein said erasing means (4) produces an erasing gate signal (102) followed by the recording-reproducing means (3) producing a write gate signal (101), and after said write gate signal is turned off, the intensity of the erasing light beam is controlled by being reduced gradually with time, so that after a predetermined period of time, said erasing gate signal is turned off thereby together with said erasing light beam.

4. A data recording and reproducing apparatus according to Claim 2, wherein said erasing means (4) produces an erasing gate signal (102) followed by the recording-reproducing means (3) producing a write gate signal (101), and after said write gate signal is turned off, the intensity of the erasing light beam is controlled by being reduced gradually with time, so that after a predetermined period of time, said erasing gate signal is turned off thereby together with said erasing light beam.

5. A data recording and reproducing apparatus comprising means (1, 2) for radiating an erasing light beam (10) and a recording-reproducing light beam (9) sequentially on an optical disc to record and reproduce and erase data, means (3) for recording and reproducing the data with said recording-reproducing light beam, means (4) for erasing the data with said erasing light beam, and means (15) for modulating said erasing light beam, wherein said erasing means (4) radiates a data recording section of the disc, and said erasing light beam modulating means (15) turns off by modulating the intensity of said erasing light beam with a high frequency signal.

6. A data recording and reproducing apparatus according to Claim 5, wherein said erasing light beam is radiated in advance of said recording-reproducing light beam, and after said recording-reproducing light beam is changed from the recording state into the reproducing state, the intensity of the erasing light beam is turned off by being modulated by a high frequency signal.

**7.** A data recording and reproducing apparatus according to Claim 5, wherein the erasing means (4) produces the erasing gate signal followed by said recording-reproducing means (3) producing the write gate signal, and after said write gate signal is turned off, the light intensity of said erasing light beam is modulated, so that after a predetermined period of time, the erasing gate signal is turned off together with said erasing light beam.

**8.** A data recording and reproducing apparatus according to Claim 6, wherein the erasing means (4) produces the erasing gate signal, followed by said recording-reproducing means (3) producing the write gate signal, and after said write gate signal is turned off, the light intensity of said erasing light beam is modulated, so that after a predetermined period of time, the erasing gate signal is turned off together with said erasing light beam.

**9.** A data recording and reproducing apparatus according to anyone of claims 1 to 4, wherein the output of said recording-reproducing light beam changes from the recording state into reproducing state by being pulse-modulated in said recording-reproducing means (3).

**10.** A data recording and reproducing apparatus according to anyone of claims 5 to 8, wherein the output of said recording-reproducing light beam changes from the recording state into reproducing state by being pulse-modulated in said recording-reproducing means (3).

**Revendications**

**1.** Appareil d'enregistrement et de reproduction de données, comprenant des moyens (1, 2) pour projeter successivement un faisceau lumineux d'effacement (10) et un faisceau lumineux d'enregistrement-reproduction (9) sur un disque optique afin d'enregistrer et reproduire et d'effacer des données, des moyens (3) pour enregistrer et reproduire des données avec ledit faisceau lumineux d'enregistrement-reproduction, des moyens (4) pour effacer les données avec ledit faisceau lumineux d'effacement, et des moyens (5) pour commander l'intensité lumineuse dudit faisceau lumineux d'effacement, lesdits moyens d'effacement (4) irradiant une section d'enregistrement de données du disque par le faisceau lumineux d'effacement et lesdits moyens (5) de commande de l'intensité du faisceau lumineux d'effacement coupant l'intensité dudit faisceau lumineux d'effacement en la réduisant graduellement.

**2.** Appareil d'enregistrement et de reproduction de données selon la revendication 1, dans lequel le faisceau lumineux d'effacement est projeté en avance par rapport au faisceau lumineux d'enregistrement-reproduction et, après que le faisceau lumineux d'enregistrement-reproduction est passé de l'état d'enregistrement à l'état de reproduction, l'intensité du faisceau lumineux d'effacement est progressivement réduite et coupée.

**3.** Appareil d'enregistrement et de reproduction de données selon la revendication 1, dans lequel lesdits moyens d'effacement (4) produisent un signal de déclenchement d'effacement (102), suivi de la production d'un signal de déclenchement d'écriture (101) par les moyens d'enregistrement-reproduction (3), et, après que ledit signal de déclenchement d'écriture a été coupé, l'intensité du faisceau lumineux d'effacement est commandée de façon à être réduite graduellement dans le temps, de telle sorte qu'après une période de temps prédéterminée, ledit signal de déclenchement d'effacement soit ainsi coupé en même temps que le faisceau lumineux d'effacement.

**4.** Appareil d'enregistrement et de reproduction de données selon la revendication 2, dans lequel lesdits moyens d'effacement (4) produisent un signal de déclenchement d'effacement (102), suivi de la production d'un signal de déclenchement d'écriture (101) par les moyens d'enregistrement-reproduction (3), et, après que ledit signal de déclenchement d'écriture a été coupé, l'intensité du faisceau lumineux d'effacement est commandée de façon à être réduite graduellement dans le temps, de telle sorte qu'après une période de temps prédéterminée, ledit signal de déclenchement d'effacement soit ainsi coupé en même temps que le faisceau lumineux d'effacement.

**5.** Appareil d'enregistrement et de reproduction de données, comprenant des moyens (1, 2) pour projeter successivement un faisceau lumineux d'effacement (10) et un faisceau lumineux d'enregistrement-reproduction (9) sur un disque optique afin d'enregistrer et reproduire et d'effacer des données, des moyens (3) pour enregistrer et reproduire les données avec ledit faisceau lumineux d'enregistrement-reproduction, des moyens (4) pour effacer les données avec ledit faisceau lumineux d'effacement, et des moyens (15) pour moduler ledit faisceau lumineux d'effacement, dans lequel lesdits moyens d'effacement (4) irradient une section d'enregistrement de données du disque et lesdits moyens (15) de modulation du faisceau lumineux d'effacement coupent l'intensité dudit faisceau lumineux d'effacement en la modulant avec un signal à haute fréquence.

6. Appareil d'enregistrement et de reproduction de données selon la revendication 5, dans lequel ledit faisceau lumineux d'effacement est projeté en avance par rapport audit faisceau lumineux d'enregistrement-reproduction et, après que ledit faisceau lumineux d'enregistrement-reproduction est passé de l'état d'enregistrement à l'état de reproduction, l'intensité du faisceau lumineux d'effacement est coupée en étant modulée par un signal de haute fréquence.

7. Appareil d'enregistrement et de reproduction de données selon la revendication 5, dans lequel les moyens d'effacement (4) produisent le signal de déclenchement d'effacement, suivi de la production du signal de déclenchement d'écriture par les moyens d'enregistrement-reproduction (3), et, après que ledit signal de déclenchement d'écriture a été coupé, l'intensité lumineuse dudit faisceau lumineux d'effacement est modulée, de telle sorte qu'après une période de temps prédéterminée, le signal de déclenchement d'effacement soit coupé en même temps que ledit faisceau lumineux d'effacement.

8. Appareil d'enregistrement et de reproduction de données selon la revendication 6, dans lequel les moyens d'effacement (4) produisent le signal de déclenchement d'effacement, suivi de la production du signal de déclenchement d'écriture par lesdits moyens d'enregistrement-reproduction (3), et, après que ledit signal de déclenchement d'écriture a été coupé, l'intensité lumineuse dudit faisceau lumineux d'effacement est modulée, de telle sorte qu'après une période de temps prédéterminée, le signal de déclenchement d'effacement soit coupé en même temps que ledit faisceau lumineux d'effacement.

9. Appareil d'enregistrement et de reproduction de données selon l'une quelconque des revendications 1 à 4, dans lequel la puissance finale dudit faisceau lumineux d'enregistrement-reproduction passe de l'état d'enregistrement à l'état de reproduction en étant modulée par impulsions dans lesdits moyens d'enregistrement-reproduction (3).

10. Appareil d'enregistrement et de reproduction de données selon l'une quelconque des revendications 5 à 8, dans lequel la puissance finale dudit faisceau lumineux d'enregistrement-reproduction passe de l'état d'enregistrement à l'état de reproduction en étant modulée par impulsions dans lesdits moyens d'enregistrement-reproduction (3).

## Patentansprüche

1. Datenaufzeichnungs- und Wiedergabeeinrichtung, enthaltend eine Einrichtung (1, 2) zum Einstrahlen eines Löschlichtbündels (10) und eines Aufzeichnungs-Wiedergabelichtbündels (9) nacheinander auf eine optische Platte, um Daten aufzuzeichnen und wiederzugeben und zu löschen, eine Einrichtung (3) zum Aufzeichnen und Wiedergeben von Daten mit dem Aufzeichnungs-Wiedergabelichtbündel, eine Einrichtung (4) zum Löschen der Daten mit dem Löschlichtbündel, und eine Einrichtung (5) zum Steuern der Lichtintensität des Löschlichtbündels, wobei die Löscheinrichtung (4) einen Datenaufzeichnungsabschnitt der Platte mit dem Löschlichtbündel bestrahlt und die Löschlichtbündelintensitätssteuereinrichtung (5) die Intensität des Löschlichtbündels durch allmähliches Vermindern derselben abschaltet.

2. Datenaufzeichnungs- und Wiedergabeeinrichtung nach Anspruch 1, bei der das Löschlichtbündel dem Aufzeichnungs-Wiedergabelichtbündelvorangehend eingestrahlt wird, und nachdem das Aufzeichnungs-Wiedergabelichtbündel vom Aufzeichnungszustand in den Wiedergabezustand geändert worden ist, die Intensität des Löschlichtbündels fortschreitend vermindert und abgeschaltet wird.

3. Datenaufzeichnungs- und Wiedergabeeinrichtung nach Anspruch 1, bei der die Löscheinrichtung (4) ein Löschtastsignal (102) erzeugt, worauf folgend die Aufzeichnungs-Wiedergabeeinrichtung (3) ein Schreibtastsignal (101) erzeugt, und nachdem das Schreibtastsignal abgeschaltet worden ist, die Intensität des Löschlichtbündels durch allmähliches Vermindern mit der Zeit so gesteuert wird, daß dadurch das Löschtastsignal nach einer vorgegebenen Zeitspanne zusammen mit dem Löschlichtbündel abgeschaltet wird.

4. Datenaufzeichnungs- und Wiedergabeeinrichtung nach Anspruch 2, bei der die Löscheinrichtung (4) ein Löschtastsignal (102) erzeugt, worauf folgend die Aufzeichnungs-Wiedergabeeinrichtung (3) ein Schreibtastsignal (101) erzeugt, und nachdem das Schreibtastsignal abgeschaltet worden ist, die Intensität des Löschlichtbündels durch allmähliches Vermindern mit der Zeit so gesteuert wird, daß dadurch das Löschtastsignal nach einer vorgegebenen Zeitspanne zusammen mit dem Löschlichtbündel abgeschaltet wird.

5. Datenaufzeichnungs- und Wiedergabeeinrichtung, enthaltend eine Einrichtung (1, 2) zum Einstrahlen eines Löschlichtbündels (10) und eines Aufzeichnungs-Wiedergabelichtbündels (9) nacheinander auf eine optische Platte, um Daten aufzuzeichnen und wiederzugeben und zu löschen, eine Einrichtung (3) zum Aufzeichnen und Wiedergeben der Daten mit dem Aufzeichnungs-Wiedergabelichtbündel, eine Einrichtung (4) zum Löschen der Daten mit dem Löschlichtbündel und eine Einrichtung (15) zum Modulieren des Löschlichtbündels, wobei die Löscheinrichtung (4) auf einen Datenaufzeichnungsabschnitt der Platte einstrahlt, und die Löschlichtbündelmodulationseinrichtung (15) abschaltet, indem sie die Intensität des Löschlichtbündels mit einem Hochfrequenzsignal moduliert.

6. Datenaufzeichnungs- und Wiedergabeeinrichtung nach Anspruch 5, bei der das Löschlichtbündel dem Aufzeichnungs-Wiedergabelichtbündelvorangehend eingestrahlt wird, und nachdem das Aufzeichnungs-Wiedergabelichtbündel vom Aufzeichungszustand in den Wiedergabezustand geändert worden ist, die Intensität des Löschlichtbündels abgeschaltet wird, indem es mit einem Hochfrequenzsignal moduliert wird.

7. Datenaufzeichnungs- und Wiedergabeeinrichtung nach Anspruch 5, bei der die Löscheinrichtung (4) das Löschtastsignal erzeugt, worauf folgend die Aufzeichnungs-Wiedergabeeinrichtung (3) das Schreibtastsignal erzeugt, und nachdem das Schreibtastsignal abgeschaltet ist, die Lichtintensität des Löschlichtbündels so moduliert wird, daß nach einer vorgegebenen Zeitspanne das Löschtastsignal zusammen mit dem Löschlichtbündel abgeschaltet wird.

8. Datenaufzeichnungs- und Wiedergabeeinrichtung nach Anspruch 6, bei der die Löscheinrichtung (4) das Löschtastsignal erzeugt, worauf folgend die Aufzeichnungs-Wiedergabeeinrichtung (3) das Schreibtastsignal erzeugt, und nachdem das Schreibtastsignal abgeschaltet ist, die Lichtintensität des Löschlichtbündels so moduliert wird, daß nach einer vorgegebenen Zeitspanne das Löschtastsignal zusammen mit dem Löschlichtbündel abgeschaltet wird.

9. Datenaufzeichnungs- und Wiedergabeeinrichtung nach einem der Ansprüche 1 bis 4, bei der das Ausgangssignal des Aufzeichnungs-Wiedergabelichtbündels vom Aufzeichnungszustand in den Wiedergabezustand wechselt, indem es in der Aufzeichnungs-Wiedergabeeinrichtung (3) pulsmoduliert wird.

10. Datenaufzeichnungs- und Wiedergabeeinrichtung nach einem der Ansprüche 5 bis 8, bei der das Ausgangssignal des Aufzeichnungs-Wiedergabelichtbündels vom Aufzeichnungszustand in den Wiedergabezustand wechselt, indem es in der Aufzeichnungs-Wiedergabeeinrichtung (3) pulsmoduliert wird.

# F I G. 1

WRITE DATE — 100

WRITE GATE — 101

ERASE GATE — 102

6 → 3 RECORDING REPRODUCING LASER DRIVE CIRCUIT → 1 RECORDING-REPRODUCING LASER

4 ERASING LASER DRIVE CIRCUIT → 2 ERASING LASER

8 → 7 → 103 → 5 CONTROL VOLTAGE GENERATOR → 104

EP 0 218 243 B1

F I G. 2

## F I G. 3

WRITE DATA — 100

6

3 — RECORDING
REPRODUCING
LASER DRIVE
CIRCUIT

1 RECORDING-REPRODUCING LASER

WRITE GATE — 101

ERASE GATE — 102

8

15

4 — ERASING
LASER
DRIVE
CIRCUIT

2 ERASING LASER

RF MODULATING SIGNAL

107

108

EP 0 218 243 B1

# F I G. 4

# F I G. 5

TEMPERA-
TURE
INCREASE
GRADUAL
COOLING

(C) CRYSTAL STATE $\left(\begin{array}{l}\text{HIGH REFLECTING FACTOR}\\ \text{LOW TRANSPARENT FACTOR}\end{array}\right)$

TEMPERATURE
INCREASE
RAPID
COOLING

(A) NON-CRYSTAL $\left(\begin{array}{l}\text{LOW REFLECTING FACTOR}\\ \text{HIGH TRANSPARENT FACTOR}\end{array}\right)$
STATE

# F I G. 6

(a)

9    10    11

(b) BEAM DISTRIBUTION

12    13    $P_t$

→ RUNNING DIRECTION

(c) REPRODUCTING SIGNAL

ID SECTION

DATA SECTION    14

GAP

(d) 105

(e) 106

13